# EUROPÄISCHE PATENTSCHRIFT

(11) **EP 1 692 816 B1**
(45) Veröffentlichungstag und Bekanntmachung des Hinweises auf die Patenterteilung: **23.04.2008**
(21) Anmeldenummer: 04766613.6
(22) Anmeldetag: 26.08.2004
(51) Int. Cl.: H04L 12/24

(54) **VERFAHREN ZUM ERSATZSCHALTEN VON RÄUMLICH GETRENNTEN VERMITTLUNGSSYSTEMEN**
METHOD FOR SUBSTITUTE SWITCHING OF SPATIALLY SEPARATED SWITCHING SYSTEMS
PROCEDE POUR REALISER DES COMMUTATIONS DE REMPLACEMENT DANS DES SYSTEMES DE COMMUTATION SEPARES DANS L'ESPACE

(30) Priorität: 12.12.2003 DE 10358344
(43) Veröffentlichungstag der Anmeldung: 23.08.2006
(73) Patentinhaber: SIEMENS AKTIENGESELLSCHAFT, 80333 München (DE)
(72) Erfinder: LÖBIG, Norbert, 64291 Darmstadt (DE); TEGELER, Jürgen, 82377 Penzberg (DE)
(86) Internationale Anmeldenummer: PCT/EP2004/051925
(87) Internationale Veröffentlichungsnummer: WO 2005/057853

(56) Entgegenhaltungen:
- EP-A- 0 412 799
- US-A- 5 473 599
- US-A- 6 108 300
- US-A1- 2003 033 030

## Beschreibung

Zeitgemäße Vermittlungssysteme (Switch) verfügen durch redundantes Bereitstellen wichtiger interner Komponenten über ein hohes Mass an interner Betriebssicherheit. Damit wird im Normalbetrieb eine sehr hohe Verfügbarkeit der vermittlungstechnischen Funktionen erreicht. Treten jedoch massive äußere Einwirkungen auf (z.B. Feuer, Naturkatastrophen, Terroranschläge, kriegerische Einwirkungen etc.), so nutzen die getroffenen Vorkehrungen zur Erhöhung der Betriebssicherheit in der Regel wenig, weil Original- und Ersatzkomponenten des Vermittlungssystems sich am gleichen Ort befinden und damit in einem solchen Katastrophenfall mit hoher Wahrscheinlichkeit beide Komponenten zerstört bzw. funktionsunfähig geworden sind.

Als Lösung ist eine 1:1 Redundanz vorgeschlagen worden. Demgemäss ist vorgesehen, jedem zu schützenden Vermittlungssystem einen identischen Klon als Redundanzpartner mit identischer Hardware, Software und Datenbasis zuzuordnen. Der Klon befindet sich im hochgefahrenen Zustand, ist aber trotzdem vermittlungstechnisch nicht aktiv. Beide Vermittlungssysteme werden von einem im Netz übergeordneten, realzeitfähigen Monitor gesteuert, der die Umschaltevorgänge steuert.

In der US-Patentschrift 6,108,300 wird ein Verfahren und eine Einrichtung für eine transparente Ausfallsicherung / einen Failover einer Netzwerkeinrichtung beschrieben. Ein System und ein Verfahren zum Transfer einer Netzwerkfunktion von einer primären Netzwerkeinrichtung zu einer Backup-Netzwerkeinrichtung werden beschrieben. Die Backup-Netzwerkeinrichtung detektiert das die primäre Netzwerkeinrichtung einen Ausfall hat, dann sendet die Backup-Netzwerkeinrichtung eine Nachricht zu der primären Netzwerkeinrichtung mit dem Hinweis, dass die primäre Netzwerkein richtung ausgefallen ist. Die IP-Adresse der Backup-Netzwerkeinrichtung wird von einer Standby-IP-Adresse zu einer aktiven IP-Adresse gewechselt und die IP-Adresse der primären (fehlerhaften) Netzwerkeinrichtung wird von einer aktiven IP-Adresse zu einer Standby-IP-Adresse geändert. Pakete werden dann mittels der aktiven IP-Adresse zu der Backup-Netzwerkeinrichtung gesendet und dort verarbeitet.

Der Erfindung liegt die Aufgabe zugrunde, ein Verfahren zum Ersatzschalten von Vermittlungssystemen anzugeben, das im Fehlerfall ein effizientes Umschalten eines ausgefallenen Vermittlungssystems auf einen Redundanzpartner sicherstellt.

Diese Aufgabe wird ausgehend von den im Oberbegriff von Patentanspruch 1 angegebenen Merkmalen durch die im kennzeichnenden Teil beanspruchten Merkmale gelöst.

Erfindungsgemäß wird ein Protokoll vorgeschlagen, das zwischen einem übergeordneten realzeitfähigen Monitor und dem aktiven Vermittlungssystem einerseits sowie dem hot-standby Vermittlungssystem andererseits zum Ablauf gelangt. Das Protokoll basiert auf den Standard IP Protokollen BOOTP / DHCP, die in der Regel von jeder IP Implementierung unterstützt werden. Damit ist diese Lösung in jedem Vermittlungssystem mit IP basierten Schnittstellen mit minimalem Implementierungsaufwand realisierbar. Die Lösung ist umfassend einsetzbar und wirtschaftlich, weil im wesentlichen nur der Aufwand für den Monitor anfällt. Ferner ist sie durch Nutzung einfacher, standardisierter IP Protokolle extrem robust. Fehlsteuerungen aufgrund von temporären Ausfällen im IP core Netz beheben sich automatisch, nachdem der Ausfall beendet ist. Ein Doppelausfall des Monitors stellt in dieser Variante ebenso kein Problem dar.

Ein wesentlicher Vorteil der Erfindung ist darin zu sehen, dass beim Umschaltevorgang von einem aktiven Vermittlungssystem auf ein hot-standby Vermittlungssystem in den beteiligten Vermittlungssystemen kein Netzwerkmanagement und keinerlei zentrale Steuereinheit benötigt wird, die die Umschaltevorgänge unterstützt. Insofern ist es irrelevant, ob das Vermittlungssystem eine zentrale Steuereinheit aufweist oder nicht. Damit ist die Erfindung auch auf Router anwendbar, die - im Gegensatz zum klassischen Vermittlungssystem - in der Regel keine derartige zentrale Steuereinheit aufweisen.

Die Erfindung wird im folgenden anhand eines figürlich dargestellten Ausführungsbeispiels näher erläutert. Demgemäss ist vorgesehen, jedem zu schützenden Vermittlungssystem (z. B. S₁) einen identischen Klon als Redundanzpartner (z. B. S_{1b}) mit identischer Hardware, Software und Datenbasis zuzuordnen. Der Klon befindet sich im hochgefahrenen Zustand, ist aber trotzdem vermittlungstechnisch nicht aktiv (Betriebszustand "hot-standby"). Damit ist eine hochverfügbare, über mehrere Die beiden Vermittlungssysteme (Vermittlungssystem S₁ und der Klon oder Redundanzpartner S_{1b}) werden von einem Netzwerkmanagementsystem NM gesteuert. Die Steuerung erfolgt derart, dass der aktuelle Stand von Datenbasis und Software beider Vermittlungssysteme S₁, S_{1b} identisch gehalten wird. Dies wird erreicht, indem jedes betriebstechnische Kommando, jedes Konfigurationskommando und jedes Software-Update inklusive Patches identisch an beide Partner ausgebracht wird. Damit wird ein räumlich abgesetzter, identischen Klon zu einem in Betrieb befindlichen Switch mit identischer Datenbasis und identischem Softwarestand definiert.

Die Datenbasis beinhaltet grundsätzlich alle semipermanenten und permanenten Daten. Hierbei werden unter permanenten Daten die Daten verstanden, die als Code in Tabellen abgelegt sind und die sich nur per Patch oder Software-Update ändern lassen. Unter smipermanenten Daten werden die Daten verstanden, die z. B. über die Bedienerschnittstelle in das System gelangen und die für längere Zeit dort in der Form der Eingabe gespeichert sind. Mit Ausnahme der Konfigurationszustände des Systems werden diese Daten i.a. vom System nicht selbst verändert. Nicht in der Datenbasis enthalten sind die einen Ruf begleitenden transienten Daten, die das Vermittlungssystem nur kurzzeitig speichert und die über die Dauer eines Calls hinaus i.a. keine Bedeutung haben oder Zustandsinformationen, die transiente Überlagerungen/ Ergänzungen von konfigurativ vorgegebenen Grundzuständen sind (So könnte ein Port zwar im Grundzustand aktiv sein, aber wegen einer transienten (vorübergehenden) Störung momentan nicht zugreifbar sein).

Im weiteren verfügen die Vermittlungssysteme S₁, S_{1b} beide über mindestens ein aktives, paketorientiertes Interface zum gemeinsamen Netzwerkmanagementsystem NM. Dies sollen gemäss vorliegendem Ausführungsbeispiel die beiden Interface IF₁ sein. Die beiden Interfaces IF₁ nehmen dabei einen aktiven Betriebzustand ("act") ein. Während aber beim Vermittlungssystem S₁ auch alle verbleibenden paketorientierten Interfaces IF₂...IFₙ aktiv sind, sind beim Vermittlungssystem S_{1b} hingegen die verbleibenden Interfaces im Betriebzustand "idle". Der Zustand "idle" bedeutet, dass die Interfaces keinen Nachrichtenaustausch erlauben, aber von außen, d.h. durch eine außerhalb von Vermittlungssystem S₁ und Vermittlungssystem S_{1b} gelegenen, übergeordneten realzeitfähigen Monitor aktiviert werden können. Der Monitor kann in Hardware oder Software realisiert sein, und schaltet im Fehlerfall in Realzeit auf den Klon um. Realzeit bedeutet hier eine Zeitspanne von 1 bis 2 Sekunden. Gemäss vorliegendem Ausführungsbeispiel ist der Monitor als Steuereinrichtung SC und aus Sicherheitsgründen gedoppelt (lokale Redundanz) ausgebildet.

Die Interfaces In sind paketbasiert und stellen somit Kommunikationsschnittstellen zu paketbasierten Peripherieeinrichtungen (wie z. B. IAD, MG, SIP Proxy-Einrichtungen), fernen paketbasierten Switches, paketbasierten Media Servern dar. Sie werden mittelbar vom Monitor gesteuert, der als Steuereinrichtung SC (Switch Controller) ausgebildet ist. Dies bedeutet, dass die Steuereinrichtung SC die Interfaces IFₙ aktivieren und deaktivieren, und somit beliebig zwischen den Betriebszuständen "act" und "idle" hin- und herschalten kann.

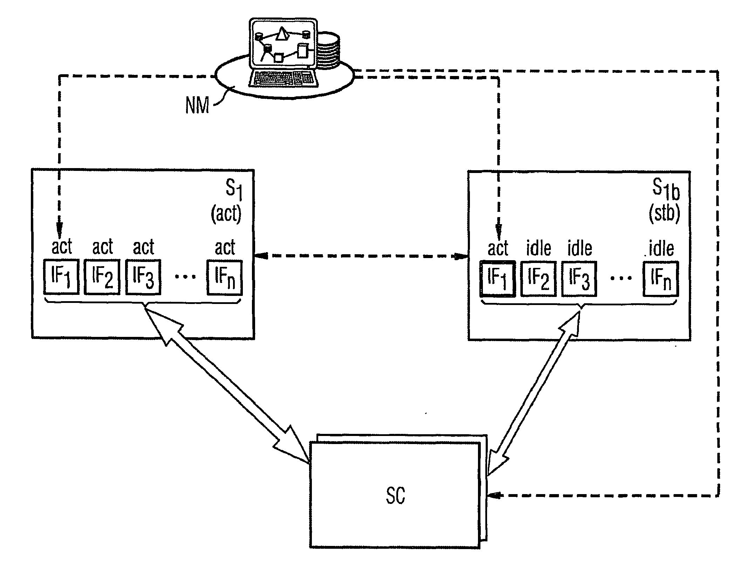

Die Konfiguration gemäss der Figur soll als Default Konfiguration gelten. Dies bedeutet, dass Vermittlungssystem S₁ vermittlungstechnisch aktiv ist, während sich Vermittlungssystem S_{1b} in einem Betriebszustand "hot-standby" befindet. Dieser Zustand ist durch eine aktuelle Datenbasis und volle Aktivität aller Komponenten bis auf die paketbasierten Interfaces (und eventuell die Bearbeitung vermittlungstechnischer Anreize) geprägt. Das (geographisch redundante) Vermittlungssystem S_{1b} kann somit von der Steuereinrichtung SC durch Aktivierung der Interfaces IF₂..IFₙ schnell (Realzeit) in den vermittlungstechnisch aktiven Zustand überführt werden. Das Interface IF₁ ist auch auf dem hot standby Vermittlungssystem aktiv, weil es die Schnittstelle zum Network Management beschreibt, die immer aktiv sein muss.

Als wesentlicher Aspekt ist anzusehen, dass die beiden geographisch redundanten Vermittlungssysteme S₁, S_{1b} sowie das Netzwerkmanagement NM und die gedoppelte Steuereinrichtung SC jeweils räumlich deutlich getrennt sein müssen.

Die Steuereinrichtung SC übermittelt dem Netzwerkmanagement NM regelmäßig den aktuellen Betriebszustand der Vermittlungssysteme S₁ und S_{1b} (act/ hot-standby, Zustand der Interfaces) sowie den eigenen Betriebszustand. Die Funktionen der Steuereinrichtung SC können optional teilweise oder auch komplett vom Netzwerkmanagement NM durchgeführt werden. Aus Sicherheitsgründen sollte das Netzwerkmanagement NM die Funktion haben, die oben beschriebenen Umschaltungen auch manuell herbeiführen zu können. Optional kann die automatische Umschaltung blockiert werden, so dass die Umschaltung nur manuell durchgeführt werden kann.

Die Vermittlungssysteme S₁ und S_{1b} können regelmäßig auch selbst überprüfen, ob ihre paketbasierten Interfaces aktiv sind. Ist dies für die Interfaces IF₂..IFₙ nicht der Fall, kann man auf den Zustand "hot-standby" schließen und gezielt gewisse Alarme, die sich aus der Nicht-Verfügbarkeit der Interfaces IF₂..IFₙ ergeben, blockieren. Weiterhin kann auf diese Weise auch der Übergang eines Switches von "hot-standby" auf "aktiv" erkannt werden. Dies ermöglicht, ggf. gezielte Maßnahmen beim Start des Vermittlungsverkehrs zu ergreifen.

Die Paket-Adressen (IP Adressen) der Interfaces I_{2..n} des Vermittlungssystems S₁ und ihrer jeweiligen Partner Interfaces von Vermittlungssystem S_{1b} können identisch sein, müssen es aber nicht. Wenn sie identisch sind, wird das Umschalten nur vom vorgeschalteten Router bemerkt. Für die Partner-Applikation im Netz ist es dagegen völlig transparent. Dies ist eine neue Anwendung und Verallgemeinerung der IP Failover Funktion. Falls das Protokoll, das ein Interface bedient, ein Umschalten des Kommunikationspartners auf eine andere Paket-Adresse erlaubt, wie dies z.B. beim H.248 Protokoll der Fall ist (ein Media Gateway kann selbständig eine neue Verbindung zu einem anderen Media Gateway Controller mit anderer IP Adresse herstellen), können die IP Adressen auch unterschiedlich sein.

In einer Ausgestaltung der Erfindung wird vorgesehen, als Steuereinrichtung SC den Zentralrechner eines weiteren Vermittlungssystems zu verwenden. Damit existiert dann eine Steuereinrichtung mit höchster Verfügbarkeit.

In einer Weiterbildung der Erfindung kommt die Etablierung einer unmittelbaren Kommunikationsschnittstelle zwischen Vermittlungssystem S₁ und Vermittlungssystem S_{1b} in Betracht. Diese kann zum Update der Datenbasis z. B. im Hinblick auf SCI -(Subscriber Controlled Input) und Gebühren-Daten genutzt werden sowie auch zum Austausch transienter Daten von einzelnen Verbindungen oder wesentlichen weiteren transienten Daten (z. B. H.248 Association Handle). Damit sind die Störungen des Betriebs aus Teilnehmer- und Betreibersicht minimierbar. Die semipermanenten und transienten Daten können dann von dem jeweiligen aktiven Vermittlungssystem in das redundante hot-standby Vermittlungssystem in einem zyklischen Zeitraster (Update) übertragen werden. Das Update der SCI-Daten hat den Vorteil, dass das zyklische Restore auf dem hot-standby-System vermieden wird und jederzeit Aktualität bzgl. SCI Daten im hot-standby System herrscht. Durch das Update Stackrelevanter Daten, wie dem H.248 association handle, kann der Peripherie die Übernahme durch ein Ersatzsystem verborgen werden, und es können die Ausfallzeiten noch stärker reduziert werden.

Grundsätzlich müssen im Netz die IP-Adressen aller Netzkomponenten bekannt sein. Die Zuteilung der IP-Adressen wird beim Hochfahren der gesamten IP-Netzeinrichtung gesteuert. Hierzu ist ein Server (BOOTP Server) im Netz vorgesehen, der mit den hochzufahrenden Clients über ein BOOTP Protokoll kommuniziert. Die Netzkomponenten (Client), wie z. B. die Vermittlungssysteme S₁, S_{1b} fordern beim Hochlauf mit Hilfe des BOOTP Protokolls beim BOOTP Server die IP-Adressen an. Mit dem Erhalt dieser IP-Adressen sind damit in allen Netzkomponenten die eigene MAC-Adresse (Netzweite Hardware Adresse) und die eigene IP-Adresse bekannt. Da diese Zuordnung im Netz noch nicht bekannt ist, wird von den Netzkomponenten diese Information im Zuge einer Broadcast Nachricht anderen Netzkomponenten (Client, Router) mitgeteilt. Hierzu wird ein eigenes Protokoll (ARP Protokoll, Adress Resolution Protokoll) verwendet.

Zur Überwachung und Umschaltung von einem aktiven Vermittlungssystem auf ein redundant angeordnetes Vermittlungssystem wird erfindungsgemäß ein Protokoll, im folgenden mit Protokoll HSCB (Hot-Standby Control Protokoll) bezeichnet, vorgeschlagen. Diese Protokoll HSCB kommt zwischen der Steuereinrichtung SC und dem Vermittlungssystem S₁ sowie zwischen der Steuereinrichtung SC und dem Vermittlungssystem S_{1b} zum Ablauf. Grundsätzlich muss das Protokoll in der Lage sein, das Vermittlungssystem S₁ nach dem Hochfahren (Recovery) in einen aktiven ("act") oder einen "hot-standby" Betriebszustand zu bringen. Ferner ist das im aktiven (und optional auch das im "hot-standby") Betriebszustand befindliche Vermittlungssystem zu überwachen und im Fehlerfall die erforderlichen Umschaltungen herbeizuführen (aktives Vermittlungssystem geht nach hot-standby / hot-standby Vermittlungssystem geht nach aktiv). Optional kann Vermittlungssystem S₁ und S_{1b} explizit mitgeteilt werden, ob sie activ bzw. hot-standby sind.

Folgende Regeln werden im Protokoll HSCB zwischen der Steuereinrichtung SC und dem Vermittlungssystem S₁ bzw. S_{1b} festgelegt:

Wenn ein paketbasiertes Interface eines Vermittlungssystems sich im Betriebszustand "IDLE" befindet, schickt es regelmäßig IP Adressanforderungen ("BOOTP Request") an die Steuereinrichtung SC. Hierbei ist es nicht notwendig, dass die Steuereinrichtung SC diese BOOTP Requests der Interfaces vom Vermittlungssystem beantwortet, dies wird nur für die Adressanforderungen des Vermittlungssystems vorgenommen, das bei der Steuereinrichtung SC als aktiv gekennzeichnet ist. Im Falle einer positiven Rückantwort von der Steuereinrichtung SC wird das paketbasierte Interface in den aktiven Betriebszustand ("act") versetzt. Im Falle keiner (oder negativen) Rückantwort von der Steuereinrichtung SC bleiben die im inaktiven Betriebzustand befindlichen paketbasierten Interfaces im inaktiven Betriebszustand ("IDLE"). Nach dem Booten befinden sich alle paketbasierten Interfaces im inaktiven Betriebszustand ("IDLE"). Ein im aktiven Betriebszustand sich befindendes Interface braucht keine Adressanforderungen ("IP-Request") an die Steuereinrichtung SC zu senden.

Die Steuereinrichtung SC schickt ihrerseits regelmäßig Überwachungsnachrichten an die paketbasierten Interfaces, die diese nur beantworten müssen, wenn sie aktiv sind. Mittels einer besonderen Nachricht kann die Steuereinrichtung SC ein paketbasiertes Interface vom aktiven Betriebszustand in den inaktiven Betriebszustand ("IDLE") bringen.

Im folgenden wird der Hochlauf der Netzkonfiguration beschrieben. Grundsätzlich sind nach dem Hochlauf alle Interfaces von Vermittlungssystem S₁ und S_{1b} im inaktiven Betriebszustand "IDLE". Die Steuereinrichtung SC soll nun BOOTP Server für Vermittlungssystem S₁ und S_{1b} sein. Dies bedeutet, dass beim Hochlauf die IP Interfaces von Vermittlungssystem S₁ bzw. Vermittlungssystem S_{1b} sich ihre IP Adressen via BOOTP Request von der Steuereinrichtung SC abholen. Die Steuereinrichtung SC hat Kenntnis von der Existenz beider Vermittlungssysteme sowie von dem von diesen noch einzunehmenden Betriebszustand (act/ hot-standby). Die Steuereinrichtung SC teilt den beiden Vermittlungssystem S₁, S_{1b} den Betriebzustand implizit mit, den sie nach dem Hochlauf einzunehmen haben. Zum einen erfolgt dies für das als hot-standby zu definierende Vermittlungssystem S_{1b}, indem die Steuereinrichtung SC die BOOTP Requests der Interfaces IF₂...IFₙ nicht beantwortet. Damit haben diese Interfaces keine IP Adressen und bleiben im inaktiven Betriebszustand ("IDLE"). Sie schicken aber weiterhin regelmäßig BOOTP Requests an die Steuereinrichtung SC, die diese im Normalzustand weiterhin nicht beantwortet. Zum anderen erfolgt dies für das als aktiv zu definierende Vermittlungssystem S₁, indem die Steuereinrichtung SC alle BOOTP Requests (durch Mitteilung der IP Adresse) beantwortet, womit alle Interfaces aktiviert werden. Statt BOOTP Request können auch DHCP Request genommen werden.

Das System aus aktivem Vermittlungssystem und Klon nimmt damit den (in der Steuereinrichtung SC) vorgesehenen Zustand ein, der als fehlerfreier Normalzustand definiert ist. In diesem Zustand werden die zyklischen BOOTP Requests der Interfaces des Klons weiterhin nicht beantwortet, womit diesen auch weiterhin ihre IP Adressen fehlen. Die aktiven Interfaces von Vermittlungssystem S₁ senden keine BOOTP Requests. In diesem Normalzustand sendet nun die Steuereinrichtung SC zyklisch Überwachungsnachrichten an die Interfaces des aktiven Vermittlungssystems, die von den aktiven Interfaces beantwortet werden müssen. Ist dies der Fall, kann davon ausgegangen werden, dass das aktive Vermittlungssystem sich auch weiterhin in einem fehlerfreien Betriebszustand befindet, womit der aktive Betriebszustand beibehalten wird. Da die zyklischen BOOTP Requests vom Klon ebenfalls weiterhin eintreffen (und auch weiterhin nicht beantwortet werden), kann ebenfalls davon ausgegangen werden, dass auch der Klon sich in einem fehlerfreien Betriebszustand befindet (nach wie vor "IDLE"). Die Steuereinrichtung SC hat somit das Wissen um die Funktionsfähigkeit des aktiven Vermittlungssystems und auch des Klons gespeichert. Dieses Wissen wird mit der Quittierung der zyklischen Überwachungsnachrichten und den zyklischen BOOTP Requests des Klons stets auf aktuellem Niveau gehalten.

Im folgenden sei nun von einem schwerwiegenden Ausfall des Vermittlungssystem S₁ ausgegangen. Aufgrund der geographischen Redundanz ist mit hoher Wahrscheinlichkeit der Klon (Vermittlungssystem S_{1b}) ebenso nicht betroffen wie die Steuereinrichtung SC. Das Feststellen des Ausfalls von Vermittlungssystem S₁ sowie das Steuern der entsprechenden Umschaltevorgänge auf Vermittlungssystem S_{1b} wird von der Steuereinrichtung SC vorgenommen:

Der Ausfall von Vermittlungssystem S₁ wird von der Steuereinrichtung SC festgestellt, indem die Überwachungsnachrichten nicht mehr quittiert werden. Als Kriterium des Ausfalls soll aber nicht nur ein Kommunikationsverlust mit allen Interfaces gelten, sondern bereits mit einer vorgebbaren Anzahl (konfigurierbar, optional auch alle). Kommen also für diese vorgebbare Anzahl von Interfaces von Vermittlungssystem S₁ für längere Zeit (z.B. 1 Min.) keine Quittungen bei Steuereinrichtung SC an, so wird auf einen schwerwiegenden Ausfall von Vermittlungssystem S₁ geschlossen. Dieses Kriterium ist hinreichend, um ein Umschalten (Switchover) von Vermittlungssystem S₁ nach Vermittlungssystem S_{1b} zu veranlassen.

In diesem Fall bringt zunächst die Steuereinrichtung SC noch aktive Interfaces von Vermittlungssystem S₁ mit Hilfe einer besonderen Nachricht in den inaktiven Betriebszustand ("IDLE"). Dies Nachricht ist derart ausgebildet, dass die Interfaces von Vermittlungssystem S₁ dazu veranlasst werden, Ihre IP Adressen freizugeben. Die Nachricht wird sicherheitshalber allen Interfaces von Vermittlungssystem S₁ (also auch den ausgefallenen) zugeführt und zyklisch solange wiederholt, bis die BOOTP Requests von den nun inaktiven Interfaces bei der Steuereinrichtung SC eintreffen. Vermittlungssystem S₁ ist damit im inaktiven Betriebszustand.

Die nach wie vor zyklisch eintreffenden BOOTP Requests von S1b werden nun von der Steuereinrichtung SC beantortet, indem den Interfaces des bislang inaktiven Klons ihre IP Adressen mitgeteilt werden. Damit nimmt Vermittlungssystem S_{1b} einen aktiven Betriebzustand ein. Vermittlungssystem S_{1b} ist damit vermittlungsbereit und kann die Funktionen von Vermittlungssystem S₁ übernehmen.

Der Vorteil dieser Vorgehensweise liegt in der Vermeidung des split brain Szenarios. Die Interfaces von Vermittlungssystem S₁ sollen auch nach Recovery von Vermittlungssystem S₁ im inaktiven Betriebszustand bleiben. Vermittlungssystem S₁ ist damit bis zum nächsten Umschalten vermittlungstechnisch deaktiviert. Um das Zeitintervall inkonsistenter Interface Zustände in Vermittlungssystem S_{1b} möglichst kurz zu halten, könnte man in Vermittlungssystem S_{1b} die Requests triggern.

Im folgenden werden einige Ausfallszenarien diskutiert:

Für die Lösung gemäss der Erfindung stellt ein Totalausfall der Steuereinrichtung SC (Doppel-Ausfall der beiden Hälften) kein Problem dar, zumal ein solcher Fall extrem unwahrscheinlich ist. Dies stört in dieser Ausführungsvariante den normalen Vermittlungsbetrieb nicht. Nur die automatische Umschaltefunktion der Steuereinrichtung SC ist nicht mehr vorhanden. Sollte während dieser Zeit ein Umschalten erforderlich werden, kann es manuell vom Netzwerkmanagement NM durchgeführt werden.

Ebenso kann eine gestörte Kommunikation zwischen Vermittlungssystem S₁ und und Steuereinrichtung SC abgefangen werden. In diesem Fall kann mit sehr geringer Wahrscheinlichkeit das "split brain" Szenario auftreten. Dies bedeutet, dass die beiden Vermittlungssysteme S₁, S_{1b} zugleich einen aktiven Betriebszustand einnehmen und beide auch dieselben IP Adressen verwenden.

Um dieses gänzlich Szenario auszuschließen wird vorgeschlagen, eine gegenseitige Überwachung auf act / stb zwischen Vermittlungssystem S₁ und Vermittlungssystem S_{1b} einführen. Die Überwachung kann dieselben Mechanismen verwenden, die oben beschrieben sind. So kann beispielsweise ein dediziertes IP Interface von Vermittlungssystem S_{1b} (hot-standby) regelmässig BOOTP Requests an sein Partner Interfaces in Vermittlungssystem S₁ schicken und überwachen, ob sein Partner Interface aktiv ist. Soll nun Vermittlungssystem S_{1b} von hot-standby nach activ gehen, kann vorher geprüft werden, ob das Partner Interface ausgefallen ist (d.h. keine responses mehr schickt). Ist es weiterhin aktiv (was beim korrekten Switchover nicht der Fall sein darf und zum "split brain" führen würde), wird das Umschalten stb -> act in Vermittlungssystem S_{1b} verhindert - und damit auch das "split brain". Vermittlungssystem S₁ ist in diesem Fall mit hoher Wahrscheinlichkeit noch aktiv.

Sollte ein "split brain" Szenario doch einmal auftreten, besteht immer noch eine einfache Korrekturmöglichkeit vom Netzwerkmanagement NM aus. Demnach wird eines der beiden Vermittlungssysteme wieder in den stb Betriebszustand gebracht und durchläuft gegebenenfalls ein Wiederhochlauf (Recovery).

## Patentansprüche

1. Verfahren zum Ersatzschalten von räumlich getrennten Vermittlungssystemen, die in einer 1:1 Redundanz paarweise angeordnet sind, wobei das eine Vermittlungssystem (S₁) sich in einem aktiven Betriebszustand ("act") und das verbleibende redundante Vermittlungssystem (S_{1b}) sich in einem hot-standby Betriebszustand ("idle") befindet,
**dadurch gekennzeichnet,**
**dass** jeweils zwischen dem im aktiven Betriebszustand befindlichen Vermittlungssystem (S₁) sowie dem hierzu redundanten, im hot-standby Betriebszustand befindlichen Vermittlungssystem und einem übergeordneten Monitor (SC) nach Maßgabe des Betriebszustandes der beiden Vermittlungssysteme eine Kommunikation gesteuert wird, **dadurch gekennzeichnet**
**dass** ein Kommunikationsverlust zu dem im aktiven Betriebszustand befindlichen Vermittlungssystem (S₁) vom übergeordneten Monitor (SC) durch nicht quittierte Überwachungsnachrichten ermittelt wird, daraufhin vom übergeordneten Monitor (SC) mittels einer Nachricht zum aktiven Vermittlungssystems (S₁) die Interfaces des aktiven Vermittlungsystems (S₁) in den inaktiven Betriebszustand ("IDLE") gebracht werden und
**dass** vom reduntanten Vermittlungssystem (S_{1b}) ausgesendete und beim übergeordneten Monitor (SC) empfangene Nachrichten nunmehr durch den übergeordneten Monitor (SC) beantwortet werden und derart das im hot-standby Betriebszustand befindliche redundante Vermittlungssystem (S_{1b}) durch den übergeordneten Monitor (SC) aktiviert wird.

2. Verfahren nach Anspruch 1,
**dadurch gekennzeichnet,**
**dass** der Betriebszustand eines Vermittlungssystems durch eine vorgebbare Anzahl von paketbasierten Interfaces definiert und/ oder gesteuert wird.

3. Verfahren nach Anspruch 1, 2,
**dadurch gekennzeichnet,**
**dass** paketbasierte Interfaces eines als hot-standby definierten Vermittlungssystems einen inaktiven Betriebszustand ("IDLE") einnehmen und regelmäßig IP Adressanforderungen ("BOOTP Request") an den Monitor (SC) senden, der diese im fehlerfreien Betrieb nicht beantwortet.

4. Verfahren nach Anspruch 1 bis 3,
**dadurch gekennzeichnet,**
**dass** paketbasierte Interfaces eines als aktiv definierten Vermittlungssystems einen aktiven Betriebszustand ("act") einnehmen wobei regelmäßige IP Adressanforderungen ("BOOTP Request") an den Monitor (SC) unterbleiben.

5. Verfahren nach einem der vorstehenden Ansprüche,
**dadurch gekennzeichnet,**
**dass** lediglich im Falle einer positiven Rückantwort vom Monitor (SC) ein bis dahin inaktives, paketbasiertes Interface in den aktiven Betriebszustand ("act") versetzt wird.

6. Verfahren nach einem der vorstehenden Ansprüche,
**dadurch gekennzeichnet,**
**dass** vom übergeordneten Monitor (SC) Überwachungsnachrichten an die im aktiven Betriebzustand befindlichen Interfaces gesendet werden, die von diesen quittiert werden.

7. Verfahren nach einem der vorstehenden Ansprüche,
**dadurch gekennzeichnet,**
**dass** bei Ausbleiben der Quittung auf die Überwachungsnachrichten von dem übergeordneten Monitor (SC) auf einen Fehler geschlossen wird, und in diesem Fall mittels einer besonderen Nachricht die paketbasierte Interfacees des bislang aktiven Vermittlungssystems in einen inaktiven Betriebszustand gesteuert werden.

8. Verfahren nach einem der vorstehenden Ansprüche,
**dadurch gekennzeichnet,**
**dass** bei Ausbleiben der Quittung auf die Überwachungsnachrichten von dem übergeordneten Monitor (SC) auf einen Fehler geschlossen wird, und in diesem Fall die zyklischen IP Adressanforderungen der inaktiven Interfaces durch die positive Rückantwort beantwortet werden.

9. Verfahren nach einem der vorstehenden Ansprüche,
**dadurch gekennzeichnet,**
**dass** die positive Rückantwort vom Monitor (SC) die IP Adresse des anfordernden paketbasierten Interfaces enthält.

10. Verfahren nach einem der vorstehenden Ansprüche,
**dadurch gekennzeichnet,**
**dass** ein vormals aktives Vermittlungssystem nach Beseitigung des Fehlerfalles solange als hot-standby Vermittlungssystem definiert bleibt, bis ein neuer Fehlerfall die Umschaltung erzwingt.

## Claims

1. A method for protection switching of geographically separate switching systems which are disposed in pairs in a 1:1 redundancy arrangement, with one switching system (S₁) being in an active operating state ("act") and the remaining redundant switching system (S_{1b}) being in a hot-standby operating state ("idle"),
**characterised in that**
a communication is controlled in each case between the switching system (S₁) in the active operating state as well as the associated redundant switching system in the hot-standby operating state and a higher-level monitor (SC) in accordance with the operating state of the two switching systems,
**characterised in that**
a loss of communication to the switching system (S₁) in the active operating state is determined by the high-level monitor (SC) by means of unacknowledged monitoring messages, consequently the interfaces of the active switching system (S₁) are brought into the inactive operating state ("IDLE") by the high-level monitor (SC) to the active switching system (S₁) by means of a message and
that messages transmitted by the redundant switching system (S_{1b}) and received at the high-level monitor (SC) are from now on answered by the high-level monitor (SC) and such that the redundant switching system (S_{1b}) in the hot-standby operating state is activated by the high-level monitor (SC).

2. Method according to claim 1,
**characterised in that**
the operating state of a switching system is defined and/or controlled by a predefinable number of packet-based interfaces.

3. Method according to claim 1, 2,
**characterised in that**
packet-based interfaces of a switching system defined as hot-standby assume an inactive operating state ("IDLE") and send IP address requests ("BOOTP request") at regular intervals to the monitor (SC), which does not respond to these messages during fault-free operation.

4. Method according to claims 1 to 3,
**characterised in that**
packet-based interfaces of a switching system defined as active assume an active operating state ("act"), with regular IP address requests ("BOOTP request") to the monitor (SC) being suppressed.

5. Method according to one of the preceding claims,
**characterised in that**
only in the case of a positive response from the monitor (SC) is a hitherto inactive, packet-based interface placed into the active operating state ("act").

6. Method according to one of the preceding claims,
**characterised in that**
monitoring messages are sent by the higher-level monitor (SC) to the interfaces in the active operating state, said messages being acknowledged by these interfaces.

7. Method according to one of the preceding claims,
**characterised in that**
if the acknowledgement of the monitoring messages from the higher-level monitor (SC) fails to arrive it is concluded that there is a fault and in this case the packet-based interfaces of the hitherto active switching system are placed into an inactive operating state in a controlled manner by means of a special message.

8. Method according to one of the preceding claims,
**characterised in that**
if the acknowledgement of the monitoring messages from the higher-level monitor (SC) fails to arrive it is concluded that there is a fault and in this case the cyclical IP address requests of the inactive interfaces are answered by the positive response.

9. Method according to one of the preceding claims,
**characterised in that**
the positive response from the monitor (SC) contains the IP address of the requesting packet-based interface.

10. Method according to one of the preceding claims,
**characterised in that**
after the fault situation has been rectified, a previously active switching system remains defined as the hot-standby switching system until a new fault situation forces the switchover.

## Revendications

1. Procédé permettant d'effectuer une commutation de remplacement entre des systèmes de commutation séparés dans l'espace qui sont agencés par paires avec une redondance de 1:1, l'un système de commutation (S₁) étant dans un état de fonctionnement actif (act) et l'autre système de commutation redondant (S_{1b}) étant dans un état de fonctionnement de secours automatique (idle),
**caractérisé en ce que**
une communication est commandée respectivement entre le système de commutation (S₁) à l'état de fonctionnement actif ainsi que le système de commutation redondant à l'état de fonctionnement de secours automatique et un moniteur hiérarchiquement supérieur (SC) selon l'état de fonctionnement des deux systèmes de commutation,
**caractérisé en ce que**
une perte de communication avec le système de commutation (S₁) à l'état de fonctionnement actif est détectée par le moniteur hiérarchiquement supérieur (SC) par des messages de surveillance non confirmés,
ensuite, le moniteur hiérarchiquement supérieur (SC), au moyen d'un message adressé au système de commutation actif (S₁), fait passer les interfaces du système de commutation actif (S₁) à l'état de fonctionnement inactif (IDLE) et
le moniteur hiérarchiquement supérieur (SC) répond maintenant à des messages émis par le système de commutation redondant (S_{1b}) et reçus au niveau du moniteur hiérarchiquement supérieur (SC) et, de la sorte, le système de commutation redondant (S_{1b}) à l'état de fonctionnement de secours automatique est activé par le moniteur hiérarchiquement supérieur (SC).

2. Procédé selon la revendication 1, **caractérisé en ce que** l'état de fonctionnement d'un système de commutation est défini et/ou commandé par un nombre prédéterminable d'interfaces basées paquets.

3. Procédé selon la revendication 1, 2, **caractérisé en ce que** des interfaces basées paquets d'un système de commutation défini comme étant de secours automatique se mettent dans un état de fonctionnement inactif (IDLE) et envoient régulièrement des requêtes d'adresses IP (BOOTP Request) au moniteur (SC) qui ne répond pas à celles-ci dans le cas d'un fonctionnement sans défaut.

4. Procédé selon la revendication 1 à 3, **caractérisé en ce que** des interfaces basées paquets d'un système de commutation défini comme étant actif se mettent dans un état de fonctionnement actif (act), des requêtes d'adresses IP (BOOTP Request) régulières au moniteur (SC) n'ayant pas lieu.

5. Procédé selon l'une des revendications précédentes, **caractérisé en ce que** c'est uniquement dans le cas d'une réponse en retour positive du moniteur (SC) qu'une interface basée paquets jusqu'alors inactive est mise à l'état de fonctionnement actif (act).

6. Procédé selon l'une des revendications précédentes, **caractérisé en ce que** sont envoyés, par le moniteur hiérarchiquement supérieur (SC), aux interfaces à l'état de fonctionnement actif, des messages de surveillance que celles-ci confirment.

7. Procédé selon l'une des revendications précédentes, **caractérisé en ce que**, en cas de non-confirmation suite aux messages de surveillance, le moniteur hiérarchiquement supérieur (SC) conclut à un défaut et, dans ce cas, les interfaces basées paquets du système de commutation jusqu'alors actif sont commandées pour passer à un état de fonctionnement inactif au moyen d'un message particulier.

8. Procédé selon l'une des revendications précédentes, **caractérisé en ce que**, en cas de non-confirmation suite aux messages de surveillance, le moniteur hiérarchiquement supérieur (SC) conclut à un défaut et, dans ce cas, il est répondu par la réponse en retour positive aux requêtes d'adresses IP cycliques des interfaces inactives.

9. Procédé selon l'une des revendications précédentes, **caractérisé en ce que** la réponse en retour positive du moniteur (SC) contient l'adresse IP de l'interface requérante basée paquets.

10. Procédé selon l'une des revendications précédentes, **caractérisé en ce qu'**un système de commutation anciennement actif, après élimination du cas de défaut, reste défini en tant que système de commutation de secours automatique jusqu'à ce qu'un nouveau cas de défaut force à commuter.
